Europäisches Patentamt

European Patent Office

Office européen des brevets

(19)

(11) EP 0 841 551 A2

(12) EUROPEAN PATENT APPLICATION

(43) Date of publication:
13.05.1998 Bulletin 1998/20

(51) Int Cl.⁶: G01M 3/36

(21) Application number: 97308968.3

(22) Date of filing: 07.11.1997

(84) Designated Contracting States:
AT BE CH DE DK ES FI FR GB GR IE IT LI LU MC NL PT SE
Designated Extension States:
AL LT LV RO SI

(30) Priority: 09.11.1996 GB 9623456

(71) Applicant: Ai Qualitek Limited
Pampisford, Cambridgeshire CB2 4EF (GB)

(72) Inventors:
• Barker, Charles Alban
St. Ives, Huntingdon, Cambs PE17 6HH (GB)
• Hawes, Anthony David Mcintosh
Cambridge, CB1 3RY (GB)
• Sharpe, Paul
Willingham, Cambs. CB4 5JB (GB)
• Simpson, Richard Iain
Cambridge CB4 3DN (GB)

(74) Representative: Geoffrey Owen & Company
76 Lower Bridge Street
Chester CH1 1RU (GB)

(54) **Leak measurement in flexible packaging**

(57) An apparatus and method for measuring of leaks in flexible gas-filled packaging wherein the force generated by a gas-filled package (10) under test is measured when the surrounding space is evacuated, and wherein a vacuum chamber (30) containing the test package (10) is arranged to be subjected to a vacuum step to achieve rapid application of vacuum to the test chamber (30). The rapid application of the vacuum is achieved by the use of a pre-evacuated chamber (36), or extra large capacity vacuum pump connectible abruptly to the test chamber (30) via a controllable valve (38).

Fig 4.

GRAPH OF PACK RESPONSE (FORCE BY TIME)

Fig. 5

**Description**

The present invention relates to the measurement of leaks in flexible gas-filled packaging and is concerned in particular with an apparatus and method for this purpose.

The principal requirement of packaging is the protection of the product and this is particularly important in connection with the packaging of food, pharmaceuticals and medical products. The increasingly stringent demands on packaging to protect the packaged product for longer periods of time has required the development of better testing methods to remove subjective judgements.

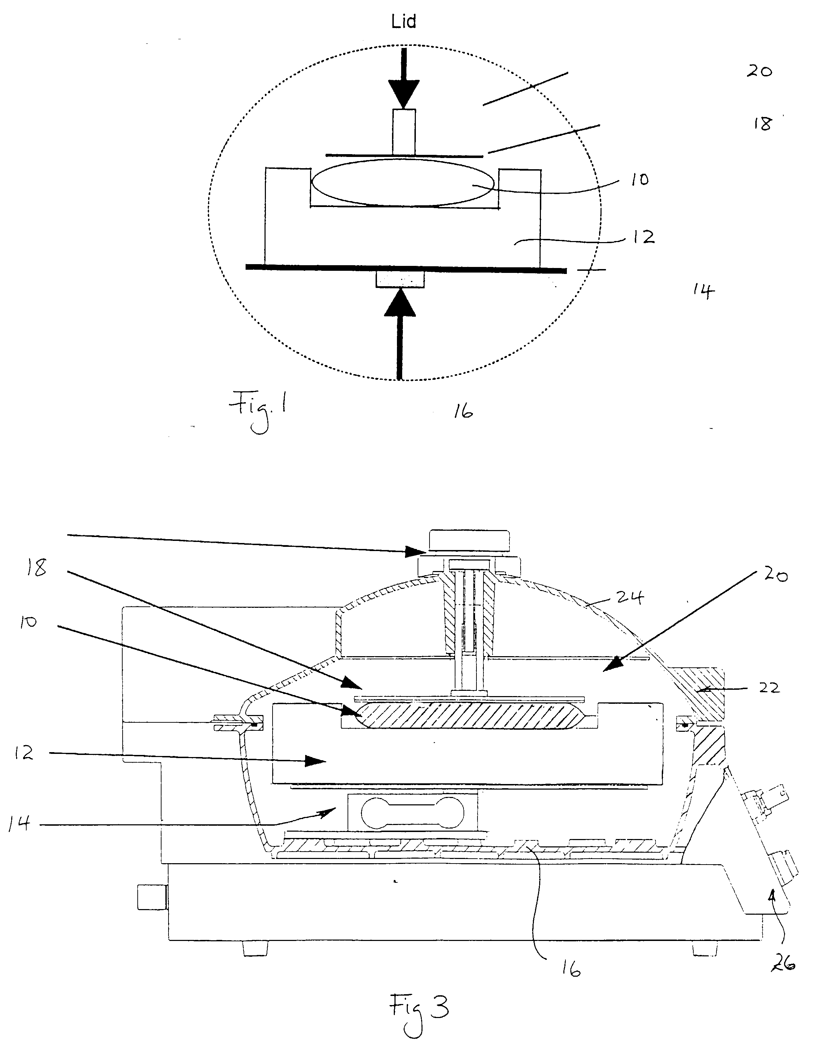

The known method for testing the integrity of flexible gas-filled packaging involves measuring the force generated by such a gas filled flexible package when the surrounding space is evacuated. The principle of operation of this known technique is illustrated in Fig. 1 of the accompanying drawings. The package 10 to be tested is placed within a recess in an infill component 12 on a strain gauge platform 14 supported by a base casting 16. A pressure plate 18 is applied to the top of the package, the whole of this apparatus being contained with a vacuum chamber 20. Usually, the pressure plate 18 is attached to a lid of the vacuum chamber 20, which can be opened to enable insertion and removal of the package 10. In use the chamber is evacuated by means of a pump and the force generated by the resulting expansion of the package is measured by a strain gauge coupled to the strain gauge platform 14. If the package has no leaks, then, if the vacuum is substantially constant, one expects the package force to be correspondingly substantially constant. On the other hand, if there is a hole in the package, gas will escape and the measured force will decay or, in an extreme case, the package will not expand at all.

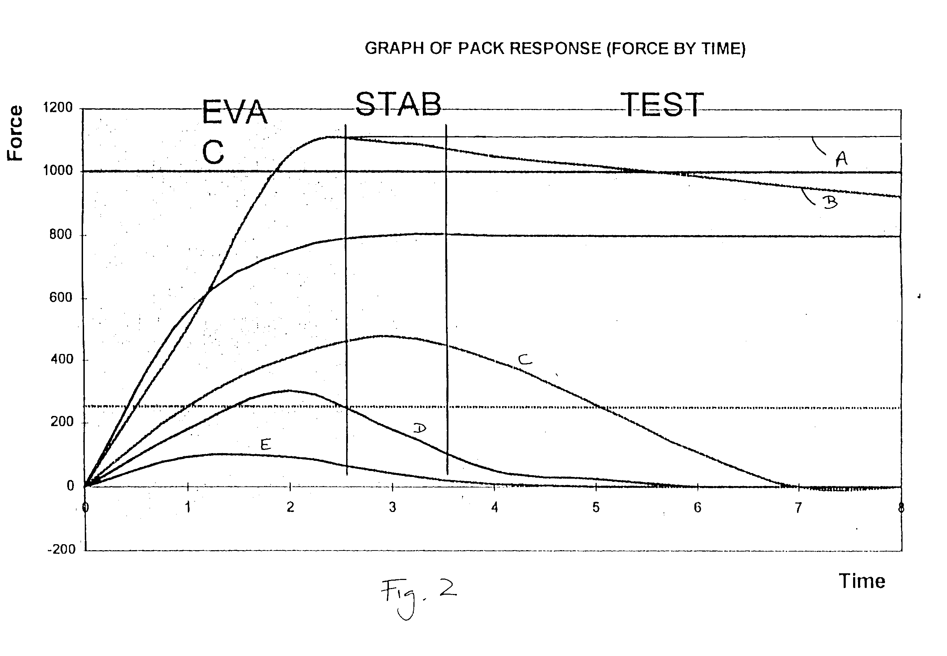

Fig. 2 of the accompanying drawings shows graphs illustrating typical cases of (A) good pack, (B) small leak, (C) medium leak, (D) medium to large leak, and (E) large leak.

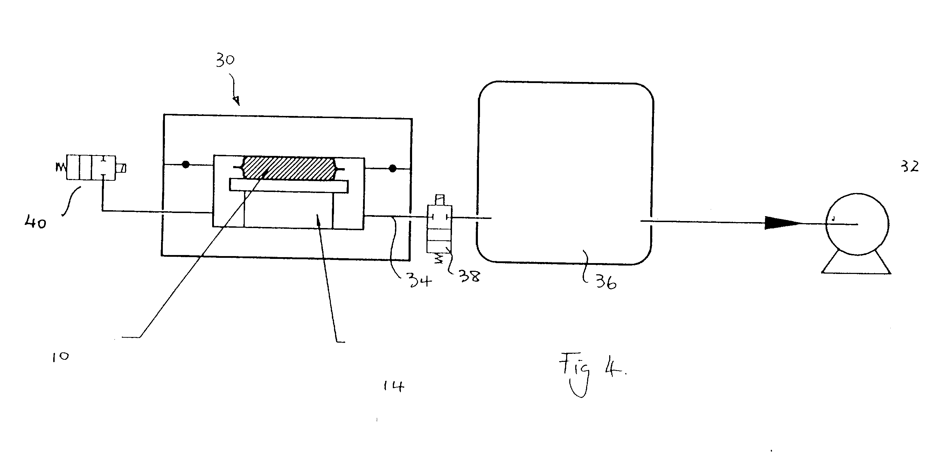

Fig. 3 of the accompanying drawings shows an implementation of the known technique in a practical machine. Equivalent parts in Figs 1 and 3 are given the same reference numbers. The apparatus of Fig. 3 includes a rigid housing 22 defining the vacuum chamber 20, the housing having a hinged lid 24 for enabling access to the housing interior. After setting up the parameters of a test programme via a membrane keypad and alphanumeric display on a front panel 26, the pack 10 is loaded, the lid 24 closed and the test sequence initiated by the pressing of a button. On completion of the test, a green light or red light is activated and the result detail and test statistics are displayed for rapid reference. The test statistics can be downloaded via an interface port for remote processing at an external computer.

This system works well for most gas-filled packages.

However, there are a number of pack types that by the nature of the overrapping techniques employed result in them being not entirely leak tight, examples being cigarette and gaseous atmosphere sterilisable packs. These tend to have an acceptable degree of porosity that prevents denaturing of the contents relative to their expected storage life.

It will be evident that such porous packages cannot be tested by the conventional apparatus described above and illustrated in Figs. 1 to 3 since they will be diagnosed as having a "large leak" as in curve E (or worse), whether they are "good" packages or not.

It is therefore an object of the present invention to provide an apparatus and method of package testing which will satisfactorily operate with inherently porous packs.

In accordance with a first aspect of the present invention, the vacuum chamber containing a test package is arranged to be subjected to a predetermined vacuum level more rapidly than is possible using the known apparatus having a vacuum pump simply connected to the test chamber.

In accordance with a second aspect of the present invention, the vacuum chamber containing a test package is arranged to be subjected to a vacuum step to achieve rapid application of vacuum to the test chamber.

In one preferred arrangement, this rapid application of the vacuum is achieved by the use of a pre-evacuated chamber which can be connected abruptly to the test chamber via a controllable valve. Advantageously, the volume of the pre-evacuated chamber is much greater than that of the internal free space in the test chamber, preferably at least three times as big, so that the connection of the two together does not in itself cause a significant reduction in the vacuum level. In a most preferred arrangement, the volume of the pre-evacuated chamber would be at least five times as big as that of the test chamber.

In another preferred arrangement, the rapid application of the vacuum is achieved by the use of a vacuum pump of such capacity that the required vacuum rise time is achieved. This is governed by the equation:

$$V = v/t \; Ln \, (P1/P2)$$

where:

V = Vacuum pump capacity
v = Volume to be evacuated
t = Evacuation time
P1 = Atmospheric pressure
P2 = Target pressure.

The apparatus of the present invention preferably includes a means for close analysis of the force generation and decay curves such that the rate of change of the generated force relative to the rate of change of vacuum may be employed to determine the degree of leak integrity of the pack under test, where the increase in force (or lack of) is a function of the resolution of the change in vacuum and the escape of air from the pack.

The invention is described further hereinafter, by way of example only, with reference to the accompanying drawings, in which:-

Fig. 1 illustrates diagrammatically a known technique for measuring leaks in gas-filled packages;

Fig. 2 shows test curves illustrating a typical operation of the apparatus of Fig. 1;

Fig. 3 is a sectional side view of a practical implementation of the diagrammatic apparatus of Fig. 1;

Fig. 4 is a diagrammatic illustration of an apparatus embodying the present invention; and

Fig. 5 shows test curves illustrating the operation of the apparatus of Fig. 4 in accordance with the present invention.

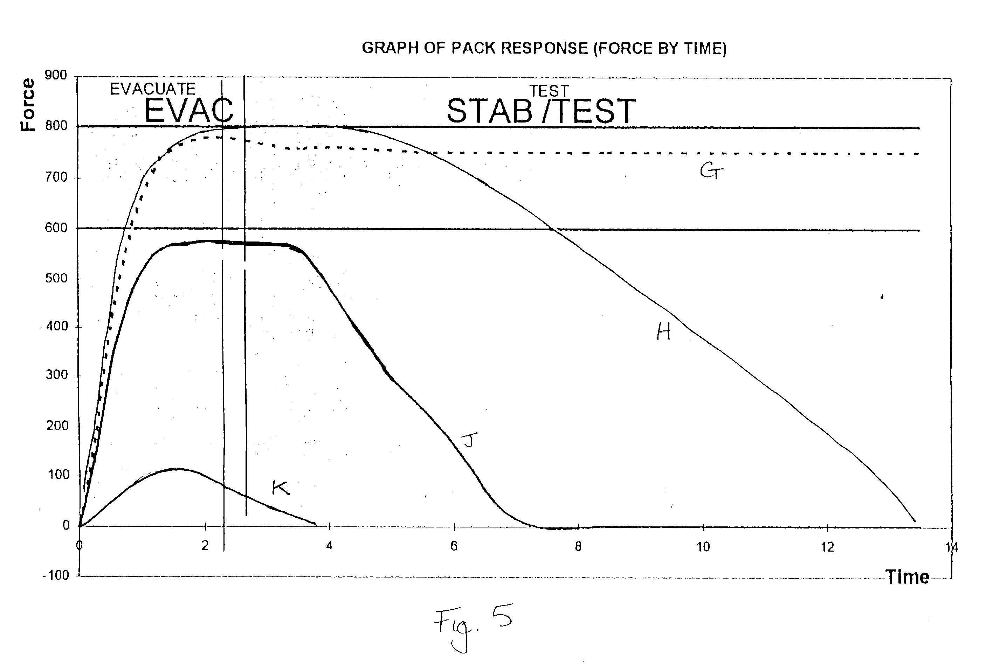

Referring now to Fig. 4, the embodiment in accordance with the present invention includes a vacuum chamber 30 which is exactly the same as the apparatus of Fig. 3, wherein a test pack 10 is placed on a strain gauge transducer 14 and the expansion force generated thereby under vacuum is monitored. In this case, however, the test pack is of the porous type described hereinbefore. The principal difference is that, in the present apparatus, the vacuum chamber is connected to the vacuum pump 32 via an evacuated reservoir 36 whose volume is large compared to the internal free space volume of the test chamber 30. Furthermore, the reservoir 36 is connected to the test chamber via a coupling 34 which provides a minimum of resistance/throttling therebetween. Disposed in the pipework coupling 34 is a solenoid valve 38 which can provide substantially instant communication between the evacuated reservoir 36 and the test chamber 30. The test chamber is also connected to a solenoid dump valve 40 to enable its vacuum to be released following a test.

The provision of the pre-evacuated reservoir 36 which is of large volume compared to the test chamber and the good, controlled connection between the two, enables a vacuum to be established in the test chamber very much more rapidly that was possible with the known apparatus. It has been found that, by the application of such a rapidly generated high and stable vacuum to the test chamber containing the test package, a force is initially generated, and then decays in characteristic and distinguishable ways. The test thereby involves analysis of the force generated and decay data rather more closely than simply setting pass/fail levels as previously.

As an alternative to the use of the vacuum chamber 36, the chamber 36 and relatively small pump 32 can be replaced by a sufficiently large vacuum pump which itself can generate a sufficient vacuum step for the present purposes.

By way of example, the use of the present apparatus enables the testing of the integrity of packages having large pores (typically 100μm and above but in practice usually depending on the porosity of the pack and the size of the "natural holes"). Fig. 5 shows a typical test result using the apparatus of Fig. 4, where curve G shows the vacuum level in the test chamber, curve H shows the force from a good pack, curve K shows the force from a strongly leaking pack, and curve J shows the force from a slowly leaking pack, where a point occurs when the leakage from the pack balances the ability of the vacuum to generate an increasing force.

## Claims

1. A method of measuring of leaks in flexible gas-filled packaging wherein the force generated by a gas-filled package (10) under test is measured when the surrounding space is evacuated, characterised in that a vacuum chamber (30) containing the test package (10) is arranged to be subjected to a vacuum step to achieve rapid application of vacuum to the test chamber (30).

2. A method as claimed in claim 1, wherein the rapid application of the vacuum is achieved by the use of a pre-evacuated chamber (36) which is connectible abruptly to the test chamber (30) via a controllable valve (38).

3. A method as claimed in claim 2, wherein the volume of the pre-evacuated chamber is at least three times as great as that of the internal free space in the test chamber so that the connection of the two together does not in itself cause a significant reduction in the vacuum level.

4. A method as claimed in claim 1, wherein the rapid application of the vacuum is achieved by the use of a vacuum pump which is connectible abruptly to the test chamber (30) via a controllable valve (38), the required capacity of the vacuum pump being governed by the equation:

$$V = v/t \, Ln \, \frac{(P1)}{P2}$$

where:

V = Vacuum pump capacity
v = Volume to be evacuated
t = Evacuation time
P1 = Atmospheric pressure
P2 = Target pressure.

5. An apparatus for measuring leaks in flexible gas-filled packaging, wherein the force generated by a gas-filled package (10) under test in a vacuum chamber (30) is measured when the surrounding space in the chamber (30) is evacuated, characterised in that the vacuum chamber (30) containing the test package (10) is arranged to be subjectable to a vacuum step to achieve rapid application of vacuum to the test chamber (30).

6. An apparatus as claimed in claim 5, wherein the rapid application of the vacuum is arranged to be achieved by the use of a pre-evacuated chamber (36) which is connectible abruptly to the test chamber (30) via a controllable valve (38).

7. An apparatus as claimed in claim 6, wherein the controllable valve (38) is a solenoid valve.

8. An apparatus as claimed in claim 6 or 7, wherein the volume of the pre-evacuated chamber (36) is at least three times as great as that of the internal free space in the test chamber (30) so that the connection of the two together does not in itself cause a significant reduction in the vacuum level.

9. An apparatus as claimed in claim 5, wherein the rapid application of the vacuum is arranged to be achieved by the use of a vacuum pump which is connectible abruptly to the test chamber (30) via a controllable valve (38), the required capacity of the vacuum pump being governed by the equation:

$$V = v/t \, \mathrm{Ln} \frac{(P1)}{P2}$$

where:

V = Vacuum pump capacity
v = Volume to be evacuated
t = Evacuation time
P1 = Atmospheric pressure
P2 = Target pressure.

Lid

Fig. 1

Fig 3

GRAPH OF PACK RESPONSE (FORCE BY TIME)

Fig. 2

EP 0 841 551 A2

Fig 4.

EP 0 841 551 A2

GRAPH OF PACK RESPONSE (FORCE BY TIME)

Fig. 5

EP 0 841 551 A2